# EUROPEAN PATENT APPLICATION

(11) **EP 4 008 737 A1**
(43) Date of publication of application: **08.06.2022**
(21) Application number: 20211280.1
(22) Date of filing: 02.12.2020
(51) Int. Cl.: C08G 18/18, C08G 18/20, C08G 18/48, C08G 18/76, C08J 9/14, C08L 75/08, F16L 59/02, F16L 59/14, F16L 59/147

(54) **AN INSULATED PIPE WITH AN INCREASED COMPRESSIVE STRENGTH AND AXIAL SHEAR STRENGTH**

(71) Applicant: Logstor A/S, 9670 Løgstør (DK)
(72) Inventor: THOMSEN, Tina, 9670 Løgstør (DK); BRØNNUM, Thomas, 7000 Fredericia (DK)
(74) Representative: Tomkins & Co

(57) **Abstract**

The invention relates to an insulated pipe comprising at least one inner pipe, an outer casing, and an insulating layer positioned between the outer casing and the at least one inner pipe. The insulating layer is made of a rigid polyurethane material, which has an increased compressive strength.

The present invention further relates to a method of producing the insulated pipe and the use of a delayed-action catalyst for increased compressive strength.

## Description

### Technical filed

The invention relates to a pre-insulated pipe comprising at least one inner pipe, an outer casing, and an insulating layer positioned between the outer casing and the at least one inner pipe. The insulating layer is made of a rigid polyurethane material, which has an increased compressive strength and the pipe assembly has an increased axial shear strength.

### Background

Polyurethane foam is one of the major components of pre-insulated pipe manufactured in the piping industry. Polyurethane is different from most plastic materials in that it can be tailored to meet various load requirements of varying applications. According to EN 253, there is a minimum compressive strength requirement of 0.30 MPa and for the pipe assembly there is a minimum requirement for axial shear strength both in unaged and aged condition and measured at both 23 °C and 140 °C. Therefore, in the past years, a number of optimization programs have been performed to improve/maintain a good compressive strength of the polyurethane in pre-insulated pipes and the axial shear strength of the pipe assembly.

Such an optimization has to some extend succeeded in a single inner tube setup by balancing a number of formulation and process parameters, catalyst levels, and levels of temperature for special additive polyols and raw materials. In particular, optimisation of the level of special additive polyols has proven to be an important tool to maintain a good compressive strength.

However, there is still a major challenge on improving or maintaining the compressive strength of the polyurethane material and the axial shear strength of the pipe assembly, especially within a twin inner tube setup, particularly when manufactured according to the continuous moulding technique.

It is therefore an object of the present invention to provide an insulated pipe, and a method of producing such pipe, which would overcome the above disadvantages. Is it further an object of the present invention to provide an insulated pipe having a rigid polyurethane material, which has an increased compressive strength and an increased axial shear strength of the pipe assembly, especially when said insulated pipe comprises two or more inner pipes.

### Summary

To solve the above problems with present insulated pipes, the present inventions discloses herein in a first aspect an insulated pipe comprising: at least one inner pipe; an outer casing; and an insulating layer positioned between the outer casing and the at least one inner pipe; wherein the insulating layer is made of a rigid polyurethane material prepared from a polyol comprising component, a di- or polyisocyanate, and one or more delayed-action catalysts, wherein the rigid polyurethane material has a compressive strength of at least 0.30 MPa.

The present invention hereby envisage the use of a specific catalyst package instead of the previously disclosed use of e.g. the level of special additive polyol.

The use of special additive polyol on single inner tube setups gives a fairly good compressive strength; however, special additive polyols in their current forms cannot be applied to twin tubes due to twinning or other displacement of the twin tubes. In the worst case, the two tubes may be in a horizontal position relative to each other at one end of the pre-insulated tube and in a vertical position relative to each other at the other end of the tube when the pipes are produced. This suggest that the special additive polyols have an excessive influence on the polymerisation/gel/grow reaction at the beginning of the process, so that the foam easily pushes the two tubes out of position.

The present invention therefore diverts away from the known best practice and instead utilises an alternative catalyst package. The used catalysts do not adversely affect the polymerisation at the beginning of the process, i.e. good front-end delay, but instead supports the final polymerisation later in the process, when the pipes are locked in the foam in the correct position. This will give a good polymerization of the foam, and a good back-end cure, which will in turn yield a compressive strength at a high level.

It has therefore been found by the present invention that the use of an additional catalyst package of delayed-action catalysts to a standard recipe for continuous manufacture of single and twin pre-insulated pipes improves the foam compressive strength significantly both when measured just 1 hours after production and further after post curing during 72 hours, at ambient conditions as shown in the disclosed experimental results.

There are typically three common ways of manufacturing (pre)insulated pipes. One way is traditional filling of single pipes (top-, bottom-, or midpoint filling). Another way is via a continuous moulding line technique. The third way is via a continuous spray line technique. The present invention is applicable for all methods, especially when single pipe systems are fabricated. For twin pipe systems traditional and continuous moulding are preferred, as the spray line technique may be difficult. Further, the invention is particularly useful for twin pipes manufactured by continuous moulding since the positioning of twin pipes here is a delicate matter.

Further, the present inventions discloses herein in a second aspect a method for producing an insulated pipe comprising at least one inner pipe surrounded by an layer of insulation material, the method comprising: providing one or more inner pipes; providing a shell, the outer shell being an outer casing or a mould; adding liquid insulation material comprising a polyol comprising component, an isocyanate, and a delayed-action catalyst in a liquid state between the shell and the one or more inner pipes; allowing the liquid insulation material to expand to fill the void between the one or more inner pipes and the shell; and allowing the liquid insulation material to cure through a number of consecutive development stages to form a rigid polyurethane material having a compressive strength of at least 0.30 MPa, such as at least 0.40 MPa.

Even further, the present inventions discloses herein in a third aspect use of a delayed-action catalyst for increased compressive strength in a rigid polyurethane material in an insulated pipe comprising: at least one inner pipe; an outer casing; and an insulating layer positioned between the outer casing and the at least one inner pipe, wherein the insulating layer comprises the rigid polyurethane material.

### Detailed description

When describing the below embodiments, the present invention envisages all possible combinations and permutations of the below described embodiments with the above disclosed aspects.

The invention relates to an insulated pipe comprising: at least one inner pipe; an outer casing; and an insulating layer positioned between the outer casing and the at least one inner pipe; wherein the insulating layer is made of a rigid polyurethane material prepared from a polyol comprising component, a di- or polyisocyanate, and one or more delayed-action catalysts, wherein the rigid polyurethane material has a compressive strength of at least 0.30 MPa.

It has therefore been found by the present invention that the use of an additional delayed-action catalyst package, preferably a non-acid blocked delayed action catalysts to a standard recipe for continuous manufacture of single and twin pre-insulated pipes very surprisingly improves the foam compressive strength significantly both when measured just 1 hours after production and further after post curing during 72 hours, at ambient conditions.

Traditional polyurethane catalysts accelerate the polyol-isocyanate reaction at ambient condition. When the polyurethane foam flow pattern is challenged by complex or very narrow cavities, a delayed-action is preferred.

Generally, all delayed-action catalysts can be used for the purpose, i.e. tin based catalysts, blends of tin and amine-based catalysts, acid-blocked amine catalysts and finally, non-acid blocked amine catalysts. From this group of catalysts, the metal-free and acid-free catalysts are preferred since metal-free catalyst provide better heat resistance of the foam and acid-free catalysts eliminate the corrosion risk and hence, provide better protection of the process equipment.

In one or more embodiments, the one or more delayed-action catalysts are selected from one or more of amine-based delayed-action catalysts, metal based delayed-action catalysts, or combinations hereof. In one embodiment, the metal-based delayed-action catalyst is a tin based delayed-action catalyst. In one embodiment, the amine-based delayed-action catalysts are selected from tertiary amine based delayed-action catalysts, acid-blocked amine delayed-action catalysts, non-acid blocked amine delayed-action catalysts, or combinations hereof.

Preferably, non-acid blocked delayed-action catalysts, such as Dabco^{®} 1027 or Dabco^{®} 1028 can be used. Alternatively, thermolatent catalysts such as the Polycat^{®} SA series can be applied.

Dabco^{®} 1027 or Dabco^{®} 1028 are based on a) 1,4-Diazabicyclo[2.2.2]octane (DABCO) and b) 4-Aza-1-azoniabicyclo[2.2.2]octane, 1-(2-hydroxypropyl)-, 2-ethylhexanoate (1:1) in solution in MEG or butanediol, respectively.

The Polycat SA-series is based on 1,8- diazabicyclo[5.4.0]undec-7-en in various concentrations and with different additives.

In one or more embodiments, the tertiary amine delayed-action catalyst is selected from 1-(2-hydroxypropyl)-1,4-diazabicyclo[2.2.2]octan-1-ium 2-ethylhexanoate, 1,8-diazabicyclo[5.4.0]undec-7-en, or combinations hereof.

1-(2-hydroxypropyl)-1,4-diazabicyclo[2.2.2]octan-1-ium 2-ethylhexanoate has the CAS (Chemical Abstracts Service) number 103969-79-5 and the chemical structure as shown below.

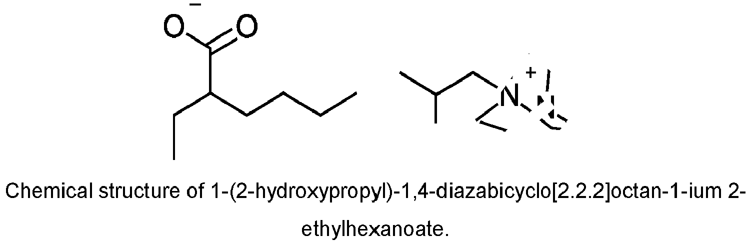

1-(2-hydroxypropyl)-1,4-diazabicyclo[2.2.2]octan-1-ium 2-ethylhexanoate is also known as 1-(2-Hydroxypropyl)-4-aza-1-azoniabicyclo[2.2.2]octane salt with 2-ethyl hexanoic acid (1:1) or as 4-Aza-1-azoniabicyclo[2.2.2]octane, 1-(2-hydroxypropyl)-, 2-ethylhexanoate (1:1).

1,8-diazabicyclo[5.4.0]undec-7-en has the CAS number 6674-22-2 and the chemical structure as shown below.

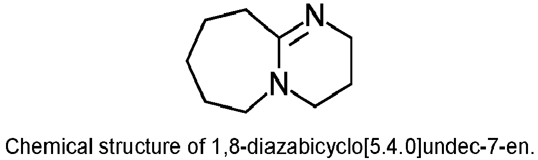

In one or more embodiments, the one or more delayed-action catalysts are in combination with one or more diols.

The role of diols is primarily as a diluent for the delayed-action catalyst, since the delayed-action catalyst are solids if not dissolved/suspended.

In one or more embodiments, the one or more diols are selected from ethane-1,2-diol, butane-1,4-diol , 1,1'-oxybis(propan-2-ol), or combinations hereof.

Ethane-1,2-diol has the CAS number 107-21-1, butane-1,4-diol has the CAS number 110-63-4, abd 1,1'-oxybis(propan-2-ol) has the CAS number 25265-71-8

In one or more embodiments, the one or more delayed-action catalysts are in combination with one or more non-delayed-action catalysts.

In one or more embodiments, the one or more non-delayed-action catalysts are selected from 1,4-diazabicyclo[2.2.2]octane, benzyldimethylamine, dimethylcyclohexylamine, N,N',N"-tris(dimethylamino-propyl)-hexahydrotriazin, or combinations hereof.

A combination between a delayed catalyst and a non-delayed catalyst may provide the best trade-off between increased curing times while still allowing the polyurethane foam to free flow and fill the narrow cavities in the pipe setup. The mixture may depend on the complexity of the pipe setup, where the amount of narrow cavities will require a longer curing time. By curing time is meant the time it takes the rigid polyurethane foam to harden enough to the pipes can be further processed, e.g. cutting the pipes or other handling.

In one or more embodiments, the rigid polyurethane material has a compressive strength of at least 0.40 MPa. In one or more embodiments, the rigid polyurethane material has a compressive strength of at least 0.40 MPa when the insulated pipe comprises one inner pipe. In one or more embodiments, the rigid polyurethane material has a compressive strength of at least 0.30 MPa, such as at least 0.40 MPa when the insulated pipe comprises two inner pipes.

Compressive strength as disclosed herein is measured according to standard EN 253 in accordance with ISO 844. These standards are known to a skilled person within the field.

It was further found that by using the same additional delayed-action catalyst package as disclosed above giving the rigid polyurethane material a compressive strength of at least 0.30 MPa also increased the axial shear strength of the pipe assembly. It has therefore been found by the present invention that the use of an additional catalyst package of delayed-action catalysts to a standard recipe for continuous manufacture of single and twin pre-insulated pipes very surprisingly improves the axial shear strength of the pipe assembly significantly both when measured at 23 °C and 140 °C and both for unaged and aged assemblies. Hence, in one or more embodiments, the rigid polyurethane material has an axial shear strength of at least 0.33 MPa when the axial shear strength is measured at 23 °C and when the rigid polyurethane material is unaged. In one or more embodiments, the rigid polyurethane material has an axial shear strength of at least 0.28 MPa when the axial shear strength is measured at 140° C and when the rigid polyurethane material is unaged. In one or more embodiments, the rigid polyurethane material has an axial shear strength of at least 0.25 MPa when the axial shear strength is measured at 23 °C and when the rigid polyurethane material is aged. In one or more embodiments, the rigid polyurethane material has an axial shear strength of at least 0.20 MPa when the axial shear strength is measured at 140° C and when the rigid polyurethane material is aged.

In one or more embodiments, the rigid polyurethane material has an axial shear strength of at least 0.33 MPa when the axial shear strength is measured at 23 °C and when the rigid polyurethane material is unaged, of at least 0.28 MPa when the axial shear strength is measured at 140° C and when the rigid polyurethane material is unaged, of at least 0.25 MPa when the axial shear strength is measured at 23 °C and when the rigid polyurethane material is aged, and of at least 0.20 MPa when the axial shear strength is measured at 140° C and when the rigid polyurethane material is aged.

In one or more embodiments, the rigid polyurethane material has an axial shear strength of at least 0.25 MPa when the axial shear strength is measured at 23 °C and when the rigid polyurethane material is aged and wherein the rigid polyurethane material has an axial shear strength of at least 0.20 MPa when the axial shear strength is measured at 140 °C and when the rigid polyurethane material is aged.

All the axial shear strength as disclosed herein are measured according to EN 253. In accordance with EN 253, the rigid polyurethane material should have an axial shear strength when the axial shear strength is measured at 23 °C and when the rigid polyurethane material is aged of at least 45% of the rigid polyurethane materials axial shear strength when the axial shear strength is measured at 23 °C and when the rigid polyurethane material is unaged.

In one or more embodiments, the insulated pipe further comprises at least one signal wire comprised in the insulating layer in the longitudinal direction of the insulated pipe.

The polyol comprising component used in the formation of the rigid polyurethane material may be one polyol, a blend of polyols or a blend of polyols and diols. Hence, in one or more embodiments, the polyol comprising component is selected from a polyol, a blend of polyols, a blend of polyols and diols, or combinations hereof.

In one or more embodiments, the one or more delayed-action catalysts are in an amount of 2% or less by weight compared to the total weight of the insulating layer material.

It is surprising that only between 0.10 and 0.35 % pure delayed-action catalyst can lead to an improvement of the compressive strength with up to more than 40%, while the catalyst was not found to influence the processing performance negatively.

In one or more embodiments, the one or more delayed-action catalysts are in an amount of 1% or less by weight compared to the total weight of the insulating layer, such as 0.5% or less, such as 0.4% or less, such as 0.3% or less, such as 0.2% or less, or such as 01% or less.

The di- or polyisocyanate used in the formation of the rigid polyurethane material may be a diisocyanate, a polyisocyanate, or a mixture of polyisocyanates. Hence, in one or more embodiments, the di- or polyisocyanate is selected from a diisocyanate, a polyisocyanate, or a mixture of polyisocyanates.

In one or more embodiments, the di- or polyisocyanate are selected from aromatic isocyanates, aliphatic isocyanates, or combinations hereof.

In one or more embodiments, the di- or polyisocyanate is selected from one or a combination of:
- mixture of polyisocyanates with 4,4' diphenylmetane diisocyanate as the main component (polymeric MDI);
- methylene diphenyl diisocyanate (MDI), e.g. 4,4'-diisocyanato dicyclohexylmethane prepared as a prepolymer (modified MDI)
- mixtures of polymeric MDI and toluene diisocyanate (TDI);
- cycloaliphatic isocyanates;
- 1,6-hexamethylene diisocyanate (HDI); or
- isophorone diisocyanate (IPDI), e.g. 1-isocyanato-3-isocyanatomethyl-3,5,5-trimethyl-cyclohexane.

Methylene diphenyl diisocyanate, most often abbreviated as MDI, is an aromatic diisocyanate. Three isomers are common, varying by the positions of the isocyanate groups around the rings: 2,2'-MDI, 2,4'-MDI, and 4,4'-MDI. The 4,4' isomer is most widely used, and is also known as 4,4'-diphenylmethane diisocyanate. This isomer is also known as Pure MDI. By polymeric MDI is meant a mixture of polyisocyanates with 4,4'-MDI as the main component. 4,4'-MDI is also known as diphenylmethane-4,4'-diisocyanate. It is a light yellow coloured solid. It is not soluble in water. Diphenylmethane-4,4'-diisocyanate is a diisocyanate consisting of diphenylmethane with two isocyanate groups at the 4- and 4'-positions. It derives from a hydride of a diphenylmethane.

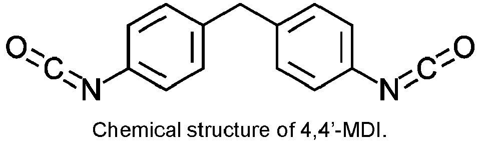

4,4'-diisocyanato dicyclohexylmethane is also known as dicyclohexylmethane-4,4'-diisocyanate.

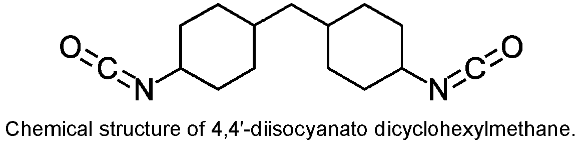

Toluene diisocyanate (TDI) is an organic compound with the formula CH₃C₆H₃(NCO)₂. Two of the six possible isomers may be used 2,4-TDI (CAS: 584-84-9) and 2,6-TDI (CAS: 91-08-7). The isocynate may be used as pure 2,4-TDI or as a mixture with as ratio of between 80:20 to 65:35 of 2,4 isomer to 2,6 isomer.

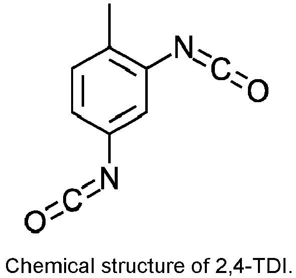

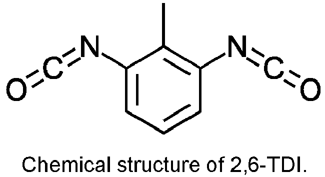

Cycloaliphatic isocyanates are as the name indicates isocyantes comprising a cycloalphatic chain. Cycloaliphatic is type of aliphatic hydrocarbon that contains a "cyclo" or ring structure in its carbon-carbon chain.

1,6-hexamethylene diisocyanate is also known as hexamethylene diisocyanate (HDI) and is the organic compound with the formula (CH₂)₆(NCO)₂. It is classified as a diisocyanate. It is a colorless liquid.

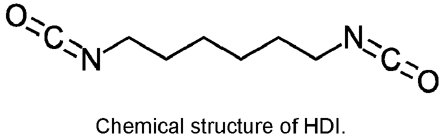

Isophorone diisocyanate (IPDI) is an organic compound in the class known as isocyanates. More specifically, it is an aliphatic diisocyanate. IPDI exists in two stereoisomers, cis and trans. Their reactivities are similar. Each stereoisomer is an unsymmetrical molecule, and thus has isocyanate groups with different reactivities. The primary isocyanate group is more reactive than the secondary isocyanate group. IPDI is also known by the IUPAC (International Union of Pure and Applied Chemistry) name 5-isocyanato-1-(isocyanatomethyl)-1,3,3-trimethylcyclohexane.

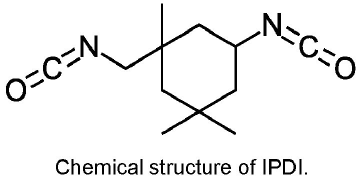

In one or more embodiments, the polyol comprising component is selected from one or a combination of:
- polyether polyols;
- polyester polyols;
- polycarbonate polyols;
- polycaprolactone polyols;
- polybutadiene polyols; or
- polysulfide polyols.

Polyether polyols may be made by the reaction of epoxides with compounds having active hydrogen atom. Polyester polyols may be made by the polycondensation reaction of multifunctional carboxylic acids and polyhydroxyl compounds. Polycarbonate polyols may be made by the reaction of epoxides with carbon dioxide. Polycaprolactone polyols may be created by a Ring-Opening Polymerization (ROP) process under mild conditions using an "initiator" diol or triol and caprolactone monomer. Polybutadiene polyols may be made via radical polymerisation of butadiene. Polysulfide polyols may be made from a reaction between an unsaturated alcohol and sulphur.

In one or more embodiments, a stoichiometric ratio of the polyol comprising component to the di- or polyisocyanate is in the range from 0.9 to 5.

A stoichiometric ratio of the polyol comprising component to the di- or polyisocyanate is also called the isocyanate index, and a range from 0.9 to 5 is equivalent to an isocyanate index from 90 to 500.

The insulation material according to the present disclosure may have a density after curing from 32 kg/m³ up to, or above, 55 kg/m³. The overall thermal conductivity (lambda value, λ) for the insulated pipe is at the most 0.029 W/m K (milli watt per meter per Kelvin). This values is in accordance with EN 253 (λ50-unaged condition).

In one or more embodiments, the insulating layer further comprises a physical blowing agent selected from one or more of the group of n-pentane, i-pentane, c-pentane, CO₂, argon, krypton, xenon, HFC, or a hydrofluoroolefin (HFO) selected from the group comprising compounds of the formula I, 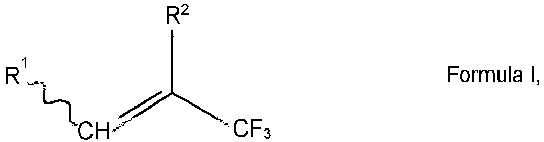 where each of R¹ and R² denote H, F, CI, or CF₃.

HFC stands for hydrofluorocarbon and is a class of organic compounds that contain fluorine and hydrogen atoms.

In one or more embodiments, R¹ in Formula I denotes CF₃ and R² denotes H, also referred to as HFO-1336mzz.

In another embodiment, R¹ in Formula I denotes F and R² denotes H, also referred to as HFO-1234ze. In another embodiment, R¹ in Formula I denotes H and R² denotes F, also referred to as HFO-1234yf.

In another embodiment, R¹ in Formula I denotes Cl and R² denotes H, also referred to as HFO-1233zd or HCFO-1233zd. A HFO wherein either R¹ or R² denotes a Cl atom, i.e. a compound comprising CI, can be referred to as HCFO instead of HFO. Therefore HFO-1233zd where R¹ in Formula I denotes Cl and R² denotes H is also referred to as HCFO-1233zd.

In yet another embodiment, R¹ in formula I denotes Cl and R² denotes F, also referred to as HFO-1224yd or HCFO-1224yd.

If R¹ is a group different from H, a Z/E configuration is created. In the above embodiments, both the Z and the E configurations are preferred. E-Z configuration, or the E-Z convention, is the IUPAC preferred method of describing the absolute stereochemistry of double bonds in organic chemistry. It is an extension of cis-trans isomer notation (which only describes relative stereochemistry) that can be used to describe double bonds having two, three or four substituents. Following the Cahn-Ingold-Prelog priority rules (CIP rules), each substituent on a double bond is assigned a priority, then positions of the higher of the two substituents on each carbon are compared to each other. If the two groups of higher priority are on opposite sides of the double bond (trans to each other), the bond is assigned the configuration E (from "entgegen", the German word for "opposite"). If the two groups of higher priority are on the same side of the double bond (cis to each other), the bond is assigned the configuration Z (from "zusammen", the German word for "together").

In one or more embodiments, the physical blowing agent selected from one or more of HFO-1233zd(E)/HCFO-1233zd(E), HFO-1233zd(Z)/HCFO-1233zd(Z), HFO-1224yd(Z)/HCFO-1224yd(Z), HFO-1224yd(E)/HCFO-1224yd(E), HFO-1234yf, HFO-1234ze(E), HFO-1234ze(Z), HFO-1336mzz(E), or HFO-1336mzz(Z).

In one or more embodiments, the physical blowing agent selected from one or more of HFO-1233zd(E) or HFO-1233zd(Z) (HCFO-1233zd(E) or HCFO-1233zd(Z)).

In one or more embodiments, the physical blowing agent selected from one or more of HFO-1234yf, HFO-1234ze(E), or HFO-1234ze(Z).

In one or more embodiments, the physical blowing agent selected from one or more of HFO-1336mzz(E) or HFO-1336mzz(Z).

In one or more embodiments, the physical blowing agent is c-pentane.

In one or more embodiments, the insulated pipe further comprises a diffusion barrier layer positioned between, or inside, the outer casing and the insulating layer, wherein the diffusion barrier layer protects against diffusion of gases such as nitrogen, oxygen, carbon dioxide, and other relevant blowing agents and gasses in and out of the insulation layer.

In one or more embodiments, the diffusion barrier layer is a non-metal containing polymer layer, a metal-polymer layer, or a metal layer. In one or more embodiments, the diffusion barrier layer comprises two layers selected from a non-metal containing polymer layer, a metal-polymer layer, or a metal layer.

In one or more embodiments, the diffusion barrier layer is a non-metal containing polymer layer comprising one or more of the polymers:
- ethylene vinyl alcohol (EVOH);
- polyvinylidene chloride (PVDC);
- polyamide (PA);
- oriented polyamide (OPA); or
- polyethylene terephthalate (PET).

Ethylene vinyl alcohol (EVOH) is a formal copolymer of ethylene and vinyl alcohol. Because the latter monomer mainly exists as its tautomer acetaldehyde, the copolymer is prepared by polymerization of ethylene and vinyl acetate to give the ethylene vinyl acetate (EVA) copolymer followed by hydrolysis. EVOH copolymer is defined by the mole % ethylene content: lower ethylene content grades have higher barrier properties; higher ethylene content grades have lower temperatures for extrusion.

Polyvinylidene chloride (PVDC) or Polyvinylidene dichloride is a homopolymer of vinylidene chloride. It is a remarkable barrier against water, oxygen, and aromas. It has a superior chemical resistance to alkalis and acids, is insoluble in oil and organic solvents, has a very low moisture regain and is impervious to mold, bacteria, and insects. It is soluble in polar solvents and decomposes to produce HCI above 125 °C.

Polyamide (PA) are macromolecular materials containing periodically recurring amide (CONH) groups in the linear molecular chains. They show characteristics, which distinguish them from other polymers, due to the amide groups forming intermolecular hydrogen bonds which strongly influence the mechanical behaviour. Polyamides can be divided into two basic types depending on whether the molecules are inherently flexible or rigid:
Aliphatic polyamides or nylons are flexible-chain polymers. The many types of nylon in use differ from each other in the ratio and position of CONH groups relative to CH2 groups in the chains.
Nylons are partially crystalline thermoplastics, which can be moulded and extruded to form films or fibres with useful engineering properties.

Rigid-chain aromatic polyamides are finding increasing use in special applications where high temperature stability and high modulus are required and also as liquid crystal polymers in electronic devices. These materials are also synthesised in several chemical species. Aromatic polyamide fibres (aramid fibres) are, however, not thermoplastics, and require strong acids or special solvents for their manufacture. In addition, partially aromatic polyamides (i.e. substances combining aliphatic and aromatic groups) are also of considerable interest.

Oriented polyamides (OPA) is a subgroup of polyamide, and is e.g. a sheet where the polyamide fibers are oriented in relation to each other, e.g. a biaxially oriented nylon film. "Biaxially oriented" means that the nylon film is stretched in two different directions to increase strength and modulus.

Polyethylene terephthalate (PET) is a general-purpose thermoplastic polymer which belongs to the polyester family of polymers. Polyester resins are known for their excellent combination of properties such as mechanical, thermal, chemical resistance as well as dimensional stability.

In one or more embodiments, the diffusion barrier layer comprises a number of sub-layers, wherein the diffusion barrier layer is positioned as a first sub-layer surrounded by at least one second sub-layer, wherein the second sublayer comprises polyethylene (PE).

In one or more embodiments, the outer casing is a plastic casing.

In one or more embodiments, the plastic casing is made from one or more of the materials:
- polyethylene (PE);
- polypropylene (PP);
- polybutylene (PB);
- co-polymer such as e.g. acrylonitrile butadiene styrene (ABS).

Polyethylene (PE) or polythene (IUPAC name polyethene or poly(methylene)) is a linear, homopolymer. Many kinds of polyethylene are known, with most having the chemical formula (C₂H₄)n. PE is usually a mixture of similar polymers of ethylene, with various values of n. It can be low density, medium density, or high density. Polyethylene is usually thermoplastic; however, it can be modified to become thermosetting instead, for example in cross-linked polyethylene.

Polypropylene (PP), also known as polypropene, is a thermoplastic polymer used in a wide variety of applications. It is produced via chain-growth polymerization from the monomer propylene. Polypropylene belongs to the group of polyolefins and is partially crystalline and non-polar.

Polybutylene (PB) is a polyolefin or saturated polymer with the chemical formula (C₄H₈)n. It should not be confused with polybutene, a low molecular weight oligomer. Polybutylene is produced by polymerisation of 1-butene using supported Ziegler-Natta catalysts. PB is a high molecular weight, linear, isotactic, and semi-crystalline polymer. PB combines typical characteristics of conventional polyolefins with certain properties of technical polymers.

Acrylonitrile butadiene styrene (ABS) has the chemical formula (C₈H₈)x·(C₄H₆)y·(C₃H₃N)z, and is a common thermoplastic polymer. Its glass transition temperature is approximately 105 °C. ABS is amorphous and therefore has no true melting point. ABS is a terpolymer made by polymerizing styrene and acrylonitrile in the presence of polybutadiene. The proportions can vary from 15 to 35% acrylonitrile, 5 to 30% butadiene and 40 to 60% styrene. The result is a long chain of polybutadiene criss-crossed with shorter chains of poly(styrene-co-acrylonitrile). The nitrile groups from neighbouring chains, being polar, attract each other and bind the chains together, making ABS stronger than pure polystyrene.

In one or more embodiments, the at least one inner pipe is made of a polymeric material, a metal, or a combination of the two.

In one or more embodiments, the at least one inner pipe is a polyethylene (PE) pipe, a cross-linked polyethylene (PEX) pipe, a copper (Cu) pipe, a steel pipe, a polyethylene of raised temperature (PE-RT) pipe, a polybutylene (PB) pipe, or a PEX-aluminium-PEX (Alupex) pipe. Further, all the types of inner pipes used may be used with an additional barrier layer.

Cross-linked polyethylene is a form of polyethylene with cross-links. Low-temperature impact strength, abrasion resistance, and environmental stress cracking resistance can be increased significantly by crosslinking, whereas hardness and rigidity are somewhat reduced. PEX does not melt any more (analogous to elastomers) and is thermally resistant (over longer periods of up to 120 °C, for short periods without electrical or mechanical load up to 250 °C). With increasing crosslinking density also the maximum shear modulus increases. PEX has significantly enhanced properties compared with ordinary PE. Crosslinking enhances the temperature properties of the base polymer. Adequate strength to 120-150 °C is maintained and chemical stability enhanced by resisting dissolution. Low temperature properties are improved. Impact and tensile strength, scratch resistance, and resistance to brittle fracture are enhanced.

Polyethylene of raised temperature is a polyethylene resin in which the molecular architecture has been designed such that a sufficient number of tie chains are incorporated to allow operation at elevated or raised temperatures (RT). Tie chains "tie" together the crystalline structures in the polymer, resulting in improved properties such as elevated temperature strength and performance, chemical resistance and resistance to slow crack growth. PE-RT is a high-temperature flexible plastic pressure pipe.

In one or more embodiments, the insulation material layer has a thickness of between 10-200 mm.

In one or more embodiments, the outer casing has a thickness of between 1-20 mm. In one or more embodiments, the thickness of the outer casing is configured to obtain an insulated pipe having a total diameter between 60 and 1200 mm. In one or more embodiments, the outer casing has an outer diameter of between 60-1200 mm. In one or more embodiments, the insulated pipe has a diameter between 60 and 1200 mm.

In one or more embodiments, each of the at least one inner pipes has a thickness of between 1-50 mm.

In one or more embodiments, the diffusion barrier layer has a thickness of 2 mm or less, such as 1 mm or less, such as 0.5 mm or less, such as 0.1 mm, such as 0.05 mm or less, or such as 0.03 mm or less.

In one or more embodiments, the insulated pipe comprises one inner pipes with an outer diameter of between 16 and 1000 mm, such as between 20 and 800 mm, such as between 50 and 500 mm, such as between 80 and 250 mm, such as between 90 and 150 mm, such as between 100 and 130 mm, or such as between 110 and 120 mm.

In one or more embodiments, the insulated pipe comprising two inner pipes.

In one or more embodiments, each of the two inner pipes has an outer diameter of between 16 and 500 mm, such as between 20 and 400 mm, such as between 30 and 300 mm, such as between 40 and 200 mm, such as between 50 and 100 mm, such as between 60 and 80 mm, or such as between 70 and 80 mm.

In one or more embodiments, the shell is a mould, wherein the method further comprises:
- removing the mould after curing the rigid polyurethane material; and
- covering the rigid polyurethane material with an outer casing.

In one or more embodiments, the method further comprises positioning a diffusion barrier layer between the outer casing and the insulating layer:
- after curing the rigid polyurethane material and before covering the rigid polyurethane material with an outer casing; or
- prior to adding the liquid insulation material by positioning the diffusion barrier layer inside or as part of the casing; or
- by providing a film comprising the diffusion barrier layer and adding the liquid insulation material between the film and the one or more inner pipes.

In one or more embodiments, when adding the insulation material in a liquid state between the mould and the at least one inner pipe comprises positioning the liquid insulation material in the vicinity of the one or more inner pipes, whereby the liquid insulation material surrounds the one or more inner pipes at an early development stage of the step of the liquid insulation material.

In one or more embodiments, the sheet is placed on a slope. Such an arrangement is herein disclosed as an elevated plate arrangement, and the features of such a plate structure is disclosed in EP 2 143 539 A. More specifically, the features of the method comprising the steps of adding the rigid polyurethane material in a liquid state between a mould and the inner pipe and letting the material expand and solidify through a number of consecutive development stages where the steps comprises positioning the material in the vicinity of the inner pipe, whereby the material surrounds the inner pipe at an early development stage may also be useful in the method as disclosed herein.

In one or more embodiments, the rigid polyurethane material is added in the liquid state on a sheet positioned in the vicinity of one or more inner pipes.

In one or more embodiments, the sheet is endless.

In one or more embodiments, the sheet is placed on a slope. In one or more embodiments, the slope is placed in the entering end of the shell. In one or more embodiments, the slope comprises side walls. In one or more embodiments, the slope is placed in an entering end of the said mould. In one or more embodiments, the slope comprises a horizontal portion perpendicular to the slopping direction of the sloped surface. In one or more embodiments, the slope has its highest point at the entering end of the mould.

In one or more embodiments, the development of stages of the rigid polyurethane material moves the sheet towards inner walls of the shell.

In one or more embodiments, curing of the liquid insulation material occurs with a curing time of 1 minutes to 2 hours. By curing time is meant the time it takes the rigid polyurethane foam to harden enough to the pipes can be further processed, e.g. cutting the pipes or putting on an end cap.

In one or more embodiments, two inner pipes arranged in parallel are provided.

The invention is further described in the following items.
1. Insulated pipe comprising:
   - at least one inner pipe;
   - an outer casing;
   - an insulating layer positioned between the outer casing and the at least one inner pipe;
      wherein the insulating layer is made of a rigid polyurethane material prepared from a polyol comprising component, a di- or polyisocyanate, and one or more delayed-action catalysts, wherein the rigid polyurethane material has a compressive strength of at least 0.30 MPa.
2. Insulated pipe according to item 1, wherein the rigid polyurethane material has a compressive strength of at least 0.40 MPa.
3. Insulated pipe according to any preceding item, wherein the rigid polyurethane material has a compressive strength of at least 0.40 MPa when the insulated pipe comprises one inner pipe.
4. Insulated pipe according to any preceding item, wherein the rigid polyurethane material has a compressive strength of at least 0.30 MPa, such as at least 0.40 MPa when the insulated pipe comprises two inner pipes.
5. Insulated pipe according to any preceding item, wherein the rigid polyurethane material has an axial shear strength of at least 0.33 MPa when the axial shear strength is measured at 23 °C and when the rigid polyurethane material is unaged.
6. Insulated pipe according to any preceding item, wherein the rigid polyurethane material has an axial shear strength of at least 0.28 MPa when the axial shear strength is measured at 140 °C and when the rigid polyurethane material is unaged.
7. Insulated pipe according to any preceding item, wherein the rigid polyurethane material has an axial shear strength of at least 0.25 MPa when the axial shear strength is measured at 23 °C and when the rigid polyurethane material is aged.
8. Insulated pipe according to any preceding item, wherein the rigid polyurethane material has an axial shear strength of at least 0.20 MPa when the axial shear strength is measured at 140 °C and when the rigid polyurethane material is aged.
9. Insulated pipe according to any preceding item , wherein the rigid polyurethane material has an axial shear strength of at least 0.33 MPa when the axial shear strength is measured at 23 °C and when the rigid polyurethane material is unaged, of at least 0.28 MPa when the axial shear strength is measured at 140 °C and when the rigid polyurethane material is unaged, of at least 0.25 MPa when the axial shear strength is measured at 23 °C and when the rigid polyurethane material is aged, and of at least 0.20 MPa when the axial shear strength is measured at 140 °C and when the rigid polyurethane material is aged.
10. Insulated pipe according to any preceding item, wherein the rigid polyurethane material has an axial shear strength of at least 0.25 MPa when the axial shear strength is measured at 23 °C and when the rigid polyurethane material is aged and wherein the rigid polyurethane material has an axial shear strength of at least 0.20 MPa when the axial shear strength is measured at 140 °C and when the rigid polyurethane material is aged.
11. Insulated pipe according to any preceding item, wherein the insulated pipe further comprises at least one signal wire comprised in the insulating layer in the longitudinal direction of the insulated pipe.
12. Insulated pipe according to any preceding item, wherein the polyol comprising component is selected from a polyol, a blend of polyols, a blend of polyols and diols, or combinations hereof.
13. Insulated pipe according to any preceding item, wherein the one or more delayed-action catalysts are selected from one or more of amine-based delayed-action catalysts, metal based delayed-action catalysts, or combinations hereof.
14. Insulated pipe according item 13, wherein the metal-based delayed-action catalysts is a tin based delayed-action catalysts.
15. Insulated pipe according item 13, wherein the amine-based delayed-action catalysts are selected from tertiary amine based delayed-action catalysts, acid-blocked amine delayed-action catalysts, non-acid blocked amine delayed-action catalysts, or combinations hereof.
16. Insulated pipe according to item 15, wherein the tertiary amine delayed-action catalyst is selected from 1-(2-hydroxypropyl)-1,4-diazabicyclo[2.2.2]octan-1-ium 2-ethylhexanoate, 1,8-diazabicyclo[5.4.0]undec-7-en, or combinations hereof.
17. Insulated pipe according to any preceding item, wherein the one or more delayed-action catalysts are in combination with one or more diols.
18. Insulated pipe according to item 17, wherein the one or more diols are selected from ethane-1,2-diol, butane-1,4-diol , 1,1'-oxybis(propan-2-ol), or combinations hereof.
19. Insulated pipe according to any preceding item, wherein the one or more delayed-action catalysts are in combination with one or more non-delayed-action catalysts.
20. Insulated pipe according to item 19, wherein the one or more non-delayed-action catalysts are selected from 1,4-diazabicyclo[2.2.2]octane, benzyldimethylamine, dimethylcyclohexylamine, N, N', N"-tris(dimethylamino-propyl)-hexahydrotriazin, or combinations hereof.
21. Insulated pipe according to any preceding item, wherein the one or more delayed-action catalysts are in an amount of 2% or less by weight compared to the total weight of the insulating layer material.
22. Insulated pipe according to item 21, wherein the one or more delayed-action catalysts are in an amount of 1 % or less by weight compared to the total weight of the insulating layer, such as 0.5% or less, such as 0.4% or less, such as 0.3% or less, such as 0.2% or less, or such as 0.1% or less.
23. Insulated pipe according to any preceding item, wherein the di- or polyisocyanate is selected from a diisocyanate, a polyisocyanate, or a mixture of polyisocyanates.
24. Insulated pipe according to any preceding item, wherein the di- or polyisocyanate are selected from aromatic isocyanates, aliphatic isocyanates, or combinations hereof.
25. Insulated pipe according to any preceding item, wherein the di- or polyisocyanate is selected from one or a combination of:
   - mixture of polyisocyanates with 4,4' diphenylmetane diisocyanate as the main component (polymeric MDI);
   - methylene diphenyl diisocyanate (MDI), e.g. 4,4'-diisocyanato dicyclohexylmethane prepared as a prepolymer (modified MDI)
   - mixtures of polymeric MDI and toluene diisocyanate (TDI);
   - cycloaliphatic isocyanates;
   - 1,6-hexamethylene diisocyanate (HDI); or
   - isophorone diisocyanate (IPDI), e.g. 1-isocyanato-3-isocyanatomethyl-3,5,5-trimethyl-cyclohexane.
26. Insulated pipe according to any preceding item, wherein the polyol comprising component is selected from one or a combination of:
   - polyether polyols;
   - polyester polyols;
   - polycarbonate polyols;
   - polycaprolactone polyols;
   - polybutadiene polyols; or
   - polysulfide polyols.
27. Insulated pipe according to any preceding item, wherein a stoichiometric ratio of the polyol comprising component to the di- or polyisocyanate is in the range from 0.9 to 5.
28. Insulated pipe according to any preceding items, wherein the insulating layer further comprises a physical blowing agent selected from one or more of the group of n-pentane, i-pentane, c-pentane, CO2, argon, krypton, xenon, HFC, or a hydrofluoroolefin (HFO) selected from the group comprising compounds of the formula I, 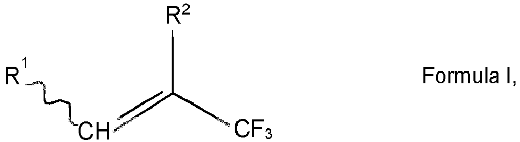 where each of R¹ and R² denote H, F, CI, or CF₃.
29. Insulated pipe according to item 28, wherein R¹ in Formula I denotes Cl and R² denotes H.
30. Insulated pipe according to item 28, wherein R¹ in Formula I denotes H and R² denotes F.
31. Insulated pipe according to item 28, wherein R¹ in Formula I denotes CF₃ and R² denotes H.
32. Insulated pipe according to item 28, wherein R¹ in Formula I denotes F and R² denotes H.
33. Insulated pipe according to any preceding item further comprising a diffusion barrier layer positioned between, or inside, the outer casing and the insulating layer, wherein the diffusion barrier layer protects against diffusion of gases such as nitrogen, oxygen, carbon dioxide, and other relevant blowing agents and gasses in and out of the insulation layer.
34. Insulated pipe according to item 33, wherein the diffusion barrier layer is a non-metal containing polymer layer, a metal-polymer layer or a metal layer.
35. Insulated pipe according to any of the items 33-34, wherein the diffusion barrier layer is a non-metal containing polymer layer comprising one or more of the polymers:
   - ethylene vinyl alcohol (EVOH);
   - polyvinylidene chloride (PVDC);
   - polyamide (PA);
   - oriented polyamide (OPA); or
   - polyethylene terephthalate (PET).
36. Insulated pipe according to any of the items 33-35, wherein the diffusion barrier layer comprises a number of sub-layers, wherein the diffusion barrier layer is positioned as a first sub-layer surrounded by at least one second sub-layer, wherein the second sublayer comprises polyethylene (PE).
37. Insulated pipe according to any preceding item, wherein the outer casing is a plastic casing.
38. Insulated pipe according to item 37, wherein the plastic casing is made from one or more of the materials:
   - polyethylene (PE);
   - polypropylene (PP);
   - polybutylene (PB);
   - co-polymer such as e.g. acrylonitrile butadiene styrene (ABS).
39. Insulated pipe according to any preceding item, wherein the at least one inner pipe is made of a polymeric material, a metal, or a combination of the two.
40. Insulated pipe according to item 39, wherein the at least one inner pipe is a polyethylene (PE) pipe, a cross-linked polyethylene (PEX) pipe, a copper (Cu) pipe, a steel pipe, a polyethylene of raised temperature (PE-RT) pipe, a polybutylene (PB) pipe, or a PEX-aluminium-PEX (Alupex) pipe.
41. Insulated pipe according to any preceding item, wherein the insulation material layer has a thickness of between 10-200 mm.
42. Insulated pipe according to any preceding item, wherein the outer casing has a thickness of between 1-20 mm.
43. Insulated pipe according to any preceding item, wherein each of the at least one inner pipes has a thickness of between 1-50 mm.
44. Insulated pipe according to any of the items 33-43, wherein the diffusion barrier layer has a thickness of 2 mm or less, such as 1 mm or less, such as 0.5 mm or less, such as 0.1 mm, such as 0.05 mm or less, or such as 0.03 mm or less.
45. Insulated pipe according to any preceding item, wherein the outer casing has an outer diameter of between 60-1200 mm.
46. Insulated pipe according to any preceding item, wherein the insulated pipe comprises one inner pipes with an outer diameter of between 16 and 1000 mm, such as between 20 and 800 mm, such as between 50 and 500 mm, such as between 80 and 250 mm, such as between 90 and 150 mm, such as between 100 and 130 mm, or such as between 110 and 120 mm.
47. Insulated pipe according to any preceding item, wherein the insulated pipe comprising two inner pipes.
48. Insulated pipe according to item 47, wherein each of the two inner pipes has an outer diameter of between 16 and 500 mm, such as between 20 and 400 mm, such as between 30 and 300 mm, such as between 40 and 200 mm, such as between 50 and 100 mm, such as between 60 and 80 mm, or such as between 70 and 80 mm.
49. Method for producing an insulated pipe comprising at least one inner pipe surrounded by an layer of insulation material, the method comprising:
   - providing one or more inner pipes;
   - providing a shell, the outer shell being an outer casing or a mould;
   - adding liquid insulation material comprising a polyol comprising component, an isocyanate, and a delayed-action catalyst in a liquid state between the shell and the one or more inner pipes;
   - allowing the liquid insulation material to expand to fill the void between the one or more inner pipes and the shell; and
   - allowing the liquid insulation material to cure through a number of consecutive development stages to form a rigid polyurethane material having a compressive strength of at least 0.30 MPa, such as at least 0.40 MPa.
50. Method according to item 49, wherein the shell is a mould, wherein the method further comprises:
   - removing the mould after curing the rigid polyurethane material; and
   - covering the rigid polyurethane material with an outer casing.
51. Method according to any of the items 49-50, wherein the method further comprises positioning a diffusion barrier layer between the outer casing and the insulating layer:
   - after curing the rigid polyurethane material and before covering the rigid polyurethane material with an outer casing; or
   - prior to adding the liquid insulation material by positioning the diffusion barrier layer inside or as part of the casing; or
   - by providing a film comprising the diffusion barrier layer and adding the liquid insulation material between the film and the one or more inner pipes.
52. Method according to any of the items 49-51, wherein when adding the insulation material in a liquid state between the mould and the at least one inner pipe comprises positioning the liquid insulation material in the vicinity of the one or more inner pipes, whereby the liquid insulation material surrounds the one or more inner pipes at an early development stage of the step of the liquid insulation material.
53. Method according to item 52, wherein the liquid insulation material is added in the liquid state on a sheet positioned in the vicinity of one or more inner pipes.
54. Method according to item 53, wherein the sheet is endless.
55. Method according to item 53 or 54, wherein the development of stages of the insulation material moves the sheet towards inner walls of the shell.
56. Method according to any of the items 53-55, wherein the sheet is placed on a slope.
57. Method according to item 56, wherein the slope is placed in an entering end of the said mould.
58. Method according to any of the items 56-57, wherein the slope comprises side walls.
59. Method according to any of the items 56-58, wherein the slope comprises a horizontal portion perpendicular to the slopping direction of the sloped surface.
60. Method according to any of the items 56-59, wherein the slope has its highest point at the entering end of the mould.
61. Method according to any of the items 49-60, wherein curing of the liquid insulation material occurs with a curing time of 1 minutes to 2 hours.
62. Method according to any of the items 49-61, wherein two inner pipes arranged in parallel are provided.
63. Use of a delayed-action catalyst for increased compressive strength in a rigid polyurethane material in an insulated pipe comprising:
   - at least one inner pipe;
   - an outer casing;
   - and an insulating layer positioned between the outer casing and the at least one inner pipe, wherein the insulating layer comprises the rigid polyurethane material.
64. Use of a delayed-action catalyst according to item 63, wherein the rigid polyurethane material has a compressive strength of at least 0.40 MPa when the insulated pipe comprises one inner pipe.
65. Use of a delayed-action catalyst according to item 63, wherein the rigid polyurethane material has a compressive strength of at least 0.30 MPa, such as at least 0.40 MPa when the insulated pipe comprises two inner pipes.
66. Use of a delayed-action catalyst according to any of the items 63-65, wherein the one or more delayed-action catalysts are selected from one or more of amine-based delayed-action catalysts, metal based delayed-action catalysts, or combinations hereof.
67. Use of a delayed-action catalyst according to item 66, wherein the metal-based delayed-action catalysts is a tin based delayed-action catalysts.
68. Use of a delayed-action catalyst according to item 66, wherein the amine-based delayed-action catalysts are selected from tertiary amine based delayed-action catalysts, acid-blocked amine delayed-action catalysts, non-acid blocked amine delayed-action catalysts, or combinations hereof.
69. Use of a delayed-action catalyst according to item 68, wherein the tertiary amine delayed-action catalyst is selected from 1-(2-hydroxypropyl)-1,4-diazabicyclo[2.2.2]octan-1-ium 2-ethylhexanoate, 1,8-diazabicyclo[5.4.0]undec-7-en, or combinations hereof.
70. Use of a delayed-action catalyst according to any of the items 63-69, wherein the one or more delayed-action catalysts are in combination with one or more diols.
71. Use of a delayed-action catalyst according to items 70, wherein the one or more diols are selected from ethane-1,2-diol, butane-1,4-diol , 1,1'-oxybis(propan-2-ol), or combinations hereof.
72. Use of a delayed-action catalyst according to any of the items 63-71, wherein the one or more delayed-action catalysts are in combination with one or more non-delayed-action catalysts.
73. Use of a delayed-action catalyst according to items 72, wherein the one or more non-delayed-action catalysts are selected from 1,4-diazabicyclo[2.2.2]octane, benzyldimethylamine, dimethylcyclohexylamine, N, N', N"-tris(dimethylamino-propyl)-hexahydrotriazin, or combinations hereof.
74. Use of a delayed-action catalyst according to any of the items 63-73, wherein the one or more delayed-action catalysts are in an amount of 2% or less by weight compared to the total weight of the insulating layer material.
75. Use of a delayed-action catalyst according to items 74, wherein the one or more delayed-action catalysts are in an amount of 1% or less by weight compared to the total weight of the insulating layer, such as 0.5% or less, such as 0.4% or less, such as 0.3% or less, such as 0.2% or less, or such as 0.1% or less.
76. Use of a delayed-action catalyst according to any of the items 63-75, wherein the insulating layer further comprises a physical blowing agent selected from one or more of the group of n-pentane, i-pentane, c-pentane, CO2, argon, krypton, xenon, HFC, or a hydrofluoroolefin (HFO) selected from the group comprising compounds of the formula I, 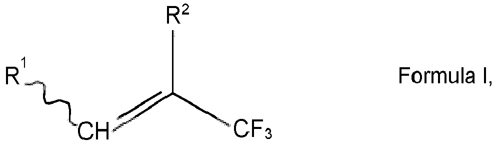 where each of R¹ and R² denote H, F, CI, or CF₃.
77. Use of a delayed-action catalyst according to item 76, wherein the HFO is HFO-1233zd/HCFO-1233zd, where R¹ in Formula I denotes Cl and R² denotes H.
78. Use of a delayed-action catalyst according to item 76, wherein the HFO is HFO-1234yf, where R¹ in Formula I denotes H and R² denotes F.
79. Use of a delayed-action catalyst according to item 76, wherein the HFO is HFO-1336mzz, where R¹ in Formula I denotes CF₃ and R² denotes H.
80. Use of a delayed-action catalyst according to item 76, wherein the HFO is HFO-1234ze, where R¹ in Formula I denotes F and R² denotes H.
81. Use of a delayed-action catalyst according to any of the items 63-80, wherein the rigid polyurethane material is a rigid polyurethane material according to any of items 1-48.

The present invention is further illustrated by the following examples, which are not to be construed as limiting the scope of protection. The features disclosed in the foregoing description and in the following examples may, both separately or in any combination thereof, be material for realising the invention in diverse forms thereof.

### Examples

Two catalyst families, one based on 1,8- diazabicyclo[5. 4.0]undec-7- en (the Polycat SA series) and one based on 1,4-Diazabicyclo[2.2.2]octane (DABCO) and 4-Aza-1-azoniabicyclo[2.2.2]octane, 1-(2-hydroxypropyl)-, 2-ethylhexanoate in solution in MEG (monoethylene glycol) (Dabco 1027) were tested. Of these two families, the 1,4-Diazabicyclo[2.2.2]octane (DABCO) and 4-Aza-1-azoniabicyclo[2.2.2]octane, 1-(2-hydroxypropyl)-, 2-ethylhexanoate family is preferred due to its most powerful back-end cure and strong promotion of foam compressive strength.

### Comparison of test results for various pipe dimensions

The following tests were performed with the pipe diameter given in millimetre:
- 114/250 mm with Dabco 1027 catalyst using 1.2 per hundred parts polyol (phpp) for showing increased compressive strength;
- 76-76/250 mm with Dabco 1027 catalyst using 0.55-0.6 phpp for showing increased compressive strength;
- 60-60/250 mm with Dabco 1027 catalyst using 0.4-0.6 phpp for showing increased compressive strength;
- 60-60/200 mm with Dabco 1027 catalyst using 1.0 phpp for showing increased compressive strength; and
- 60/140 mm with Dabco 1027 catalyst using 2.4 phpp for showing increased axial shear strength.

In the below results, density is measured according to ISO 845 giving the results in kg/m³, while Comp strength is short for compressive strength measured according to EN 253 in accordance with ISO 844 and the results are given in MPa (mega Pascal). Axial shear strength is measured according to EN 253 and the results are given in MPa (mega Pascal).

### 114/250 mm with Dabco 1027 catalyst using 1.2 phpp

The below pipes are produced using continuous moulding of foam insulation layer on steel pipes followed by extrusion of PE casing. This is a standard method known to the skilled person.

Table 1 below shows that with normal production using the standard catalyst package on a single pipe setup, the compressive strength is on average 0.33 MPa (114/250 Ref) while increasing to >0.40 MPa (114/250 Cat 1, 114/250 Cat 2, and 114/250 Cat 3) when the delayed-action catalyst package is added in 1.2 phpp.

| **Pipe Name** | | **114/250 Ref** | **114/250 Cat 1** | **114/250 Cat 2** | **114/250 Cat 3** |
|---|---|---|---|---|---|
| Polyol blend, mixture of polyether polyols, stabilizer, catalyst | | 100 | 100 | 100 | 100 |
| density (20 °C) 1.09 g/cm³ / viscosity (20 °C) 6100 mPa·s | | | | | |
| Additive polyol | | 10 | - | - | - |
| Standard catalyst package, cyclohexyldimethylamin and tris(dimethylamino-propyl)-hexahydrotriazin (blend of Polycat 8 and Polycat 41) | | 2.2 | 2.2 | 2.2 | 2.2 |
| Cyclopentane | | 6.7 | 6.7 | 6.7 | 6.7 |
| Dabco 1027 | | - | 1.2 | 1.2 | 1.2 |
| Polymeric MDI, IsoPMDI 92140 | | 164 | 171 | 171 | 171 |
| | | | | | |

| **Results - Measured after 1 hour** | | | | | |
|---|---|---|---|---|---|
| | | | | | |

| **Density kg/m³** Ref. ISO 845 | | | | | |
|---|---|---|---|---|---|
| | 1. Sample | 70 | 68 | 66 | 67 |
| | 2. Sample | 69 | 69 | 67 | 68 |
| | 3. Sample | 69 | 70 | 69 | 70 |
| | | | | | |

| **Comp strength, MPa** Ref. EN 253/ISO 844 | | | | | |
|---|---|---|---|---|---|
| | 1. Sample | 0.33 | 0.35 | 0.49 | 0.36 |
| | 2. Sample | 0.33 | 0.46 | 0.45 | 0.42 |
| | 3. Sample | 0.34 | 0.46 | 0.45 | 0.44 |
| | Average | 0.33 | 0.42 | 0.46 | 0.41 |
| Table 1 | | | | | |

### 76-76/250 mm with Dabco 1027 catalyst using 0.55-0.6 phpp

The below pipes are produced using continuous moulding of foam insulation layer on steel pipes followed by extrusion of PE casing. This is a standard method known to the skilled person.

Table 2 below shows that with normal production using the standard catalyst package on a twin pipe setup, the compressive strength is on average 0.30 MPa (76-76/250 Ref) while increasing to ≥0.40 MPa (76-76/250 Cat 1, 7676/250 Cat 2, and 76-76/250 Cat 3) when the delayed-action catalyst is added in a concentration between 0.55 and 0.6 phpp. Further, table 2 also shows that after 72 hours, the compressive strength is further increased to ≥0.43 MPa when using the delayed-action catalyst.

| **Pipe Name** | | **76-76/250 Ref** | **76-76/250 Cat 1** | **76-76/250 Cat 2** | **76-76/250 Cat 3** |
|---|---|---|---|---|---|
| Polyol blend, mixture of polyether polyols, stabilizer, catalyst | | 100 | 100 | 100 | 100 |
| density (20 °C) 1.09 g/cm³ / viscosity (20 °C) 6100 mPa·s | | | | | |
| Standard catalyst package, cyclohexyldimethylamin and tris(dimethylamino-propyl)-hexahydrotriazin (blend of Polycat 8 and Polycat 41) | | 2.5 | 2.2 | 2.2 | 2.2 |
| Cyclopentane | | 6.7 | 6.7 | 6.7 | 6.7 |
| Dabco 1027 | | - | 0.6 | 0.55 | 0.55 |
| Polymeric MDI, IsoPMDI 92140 | | 164 | 171 | 171 | 171 |
| | | | | | |

| **Results - Measured after 1 hour** | | | | | |
|---|---|---|---|---|---|
| | | | | | |

| **Density kg/m³** Ref. ISO 845 | | | | | |
|---|---|---|---|---|---|
| | 1. Sample | 72 | 73 | 75 | 74 |
| | 2. Sample | 69 | 70 | 73 | 73 |
| | | | | | |

| **Comp strength, MPa** Ref. EN 253/ISO 844 | | | | | |
|---|---|---|---|---|---|
| | 1. Sample | 0.27 | 0.41 | 0.45 | 0.41 |
| | 2. Sample | 0.33 | 0.38 | 0.39 | 0.38 |
| | Average | 0.30 | 0.40 | 0.42 | 0.40 |
| | | | | | |

| **Results - Measured after 72 hour** | | | | | |
|---|---|---|---|---|---|
| | | | | | |

| **Density kg/m³** Ref. ISO 845 | | | | | |
|---|---|---|---|---|---|
| | 1. Sample | 72 | 71 | 67 | 68 |
| | 2. Sample | 69 | 66 | 68 | 66 |
| | | | | | |

| **Comp strength, MPa** Ref. EN 253/ISO 844 | | | | | |
|---|---|---|---|---|---|
| | 1. Sample | 0.27 | 0.43 | 0.46 | 0.43 |
| | 2. Sample | 0.33 | 0.42 | 0.48 | 0.46 |
| | Average | 0.30 | 0.43 | 0.47 | 0.45 |
| Table 2 | | | | | |

### 60-60/250 mm with Dabco 1027 catalyst using 0.4-0.6 phpp

The below pipes are produced using continuous moulding of foam insulation layer on steel pipes followed by extrusion of PE casing. This is a standard method known to the skilled person.

Table 3 below shows that with normal production using the standard catalyst package on a twin pipe setup with smaller inner pipes compared to the previous results, the compressive strength is on average 0.31 MPa (60-60/250 Ref) while increasing to ≥0.34 MPa (60-60/250 Cat 1 and 60-60/250 Cat 2) when the delayed-action catalyst is added in a concentration between 0.4 and 0.6 phpp. Further, table 3 also shows that after 72 hours, the compressive strength is further increased to ≥0.39 MPa when using the delayed-action catalyst.

| **Pipe Name** | | **60-60/250 Ref** | **60-60/250 Cat 1** | **60-60/250 Cat 2** |
|---|---|---|---|---|
| Polyol blend, mixture of polyether polyols, stabilizer, catalyst | | 100 | 100 | 100 |
| density (20 °C) 1.09 g/cm³ / viscosity (20 °C) 6100 mPa·s | | | | |
| Standard catalyst package, cyclohexyldimethylamin and tris(dimethylamino-propyl)-hexahydrotriazin (blend of Polycat 8 and Polycat **41)** | | 1.5 | 1.5 | 1.5 |
| Cyclopentane | | 6.5 | 6.5 | 6.5 |
| Dabco 1027 | | - | 0.6 | 0.4 |
| Polymeric MDI, IsoPMDI 92140 | | 164 | 171 | 171 |
| | | | | |

| **Results - Measured after 1 hour** | | | | |
|---|---|---|---|---|
| | | | | |

| **Density kg/m³** Ref. ISO 845 | | | | |
|---|---|---|---|---|
| | 1. Sample | 74 | 77 | 75 |
| | 2. Sample | 69 | 73 | 73 |
| | | | | |

| **Comp strength, MPa** Ref. EN 253/ISO 844 | | | | |
|---|---|---|---|---|
| | 1. Sample | 0.30 | 0.30 | 0.34 |
| | 2. Sample | 0.31 | 0.38 | 0.35 |
| | Average | 0.31 | 0.34 | 0.36 |
| | | | | |

| **Results - Measured after 72 hour** | | | | |
|---|---|---|---|---|
| | | | | |

| **Density kg/m³** Ref. ISO 845 | | | | |
|---|---|---|---|---|
| | 1. Sample | 74 | 71 | 71 |
| | 2. Sample | 69 | 68 | 68 |
| | | | | |

| **Comp strength, MPa** Ref. EN 253/ISO 844 | | | | |
|---|---|---|---|---|
| | 1. Sample | 0.30 | 0.40 | 0.40 |
| | 2. Sample | 0.31 | 0.38 | 0.39 |
| | Average | 0.31 | 0.39 | 0.40 |
| Table 3 | | | | |

### 60-60/200 mm with Dabco 1027 catalyst using 1.0 phpp

The below pipes are produced using continuous moulding of foam insulation layer on steel pipes followed by extrusion of PE casing. This is a standard method known to the skilled person.

Table 4 below shows that with normal production using the standard catalyst package on a twin pipe setup with smaller other diameter compared to the previous results, the compressive strength is on average 0.31 MPa (60-60/200 Ref) while increasing to ≥0.35 MPa (60-60/200 Cat 1-5) when the delayed-action catalyst is added in a concentration of 1.0 phpp and the curing time is only 1 hour.

| **Pipe Name** | | **60-60/200 Ref** | **60-60/200 Cat 1** | **60-60/200 Cat 2** | **60-60/200 Cat 3** | **60-60/200 Cat 4** |
|---|---|---|---|---|---|---|
| Polyol blend, mixture of polyether polyols, stabilizer, catalyst | | 100 | 100 | 100 | 100 | 100 |
| density (20 °C) 1.09 g/cm³ / viscosity (20 °C) 6100 mPa·s | | | | | | |
| Standard catalyst package, cyclohexyldimethylamin and tris(dimethylamino-propyl)-hexahydrotriazin (blend of Polycat 8 and Polycat 41) | | 2.8 | 2.3 | 2.3 | 2.3 | 2.3 |
| Cyclopentane | | 6.8 | 6.8 | 6.8 | 6.8 | 6.8 |
| Dabco 1027 | | - | 1.0 | 1.0 | 1.0 | 1.0 |
| Polymeric MDI, IsoPMDI 92140 | | 164 | 171 | 171 | 171 | 171 |
| | | | | | | |

| **Results - Measured after 1 hour** | | | | | | |
|---|---|---|---|---|---|---|
| | | | | | | |

| **Density kg/m³** Ref. ISO 845 | | | | | | |
|---|---|---|---|---|---|---|
| | 1. Sample | 70 | 69 | 71 | 74 | 74 |
| | 2. Sample | 75 | 71 | 71 | 67 | 72 |
| | | | | | | |

| **Comp strength, MPa** Ref. EN 253/ISO 844 | | | | | | |
|---|---|---|---|---|---|---|
| | 1. Sample | 0.27 | 0.33 | 0.33 | 0.32 | 0.31 |
| | 2. Sample | 0.35 | 0.45 | 0.40 | 0.37 | 0.44 |
| | Average | 0.31 | 0.39 | 0.37 | 0.35 | 0.38 |
| Table 4 | | | | | | |

### 60/140 mm with Dabco 1027 catalyst using 2.4 phpp

The below pipes are produced using continuous moulding of foam insulation layer on steel pipes followed by extrusion of PE casing. This is a standard method known to the skilled person.

Table 5 below shows that with normal production using the standard catalyst package and an additive polyol at a level of 22 phpp on a single pipe setup, the axial shear strength is 0.31 and 0.23 MPa measured at 23 °C and 140 °C, respectively, in unaged condition and 0.22 and 0.12 MPa measured at 23 °C and 140 °C, respectively, after ageing.

When replacing the additive polyol with the delayed-action catalyst in a concentration of 2.4 phpp, the axial shear strength increases significantly to 0.39 and 0.37 MPa measured at 23 °C and 140 °C, respectively, in unaged condition and to 0.26 and 0.27 MPa measured at 23 °C and 140 °C, respectively, after ageing. This is an increase between 0.04 and 0.15, depending on whether the shear strength is measured at 23 °C or 140 °C and if the assembly is unaged or aged.

| **Pipe Name** | | **60/140 Ref** | **60/140 Cat** |
|---|---|---|---|
| Polyol blend, mixture of polyether polyols, stabilizer, catalyst | | 100 | 100 |
| density (20 °C) 1.09 g/cm³ / viscosity (20 °C) 6100 mPa·s | | | |
| Additive polyol | | 22 | - |
| Standard catalyst package, cyclohexyldimethylamin and tris(dimethylamino-propyl)-hexahydrotriazin (blend of Polycat 8 and Polycat 41) | | 4.0 | 3.33 |
| Cyclopentane | | 6.6 | 6.8 |
| Dabco 1027 | | - | 2.4 |
| Polymeric MDI, IsoPMDI 92140 | | 164 | 171 |
| | | | |

| **Results** | | | |
|---|---|---|---|
| | | | |

| **Axial shear strength, unaged** Ref. EN 253 | | | |
|---|---|---|---|
| | Measured at 23 °C | 0.31 | 0.39 |
| | Measured at 140 °C | 0.23 | 0.37 |
| | | | |

| **Axial shear strength, aged** Ref. EN 253 | | | |
|---|---|---|---|
| | Measured at 23 °C | 0.22 | 0.26 |
| | Measured at 140 °C | 0.12 | 0.27 |
| Table 5 | | | |

## Claims

1. Insulated pipe comprising:
• at least one inner pipe;
• an outer casing;
• an insulating layer positioned between the outer casing and the at least one inner pipe;
wherein the insulating layer is made of a rigid polyurethane material prepared from a polyol comprising component, a di- or polyisocyanate, and one or more delayed-action catalysts, wherein the rigid polyurethane material has a compressive strength of at least 0.30 MPa.

2. Insulated pipe according to claim 1, wherein the rigid polyurethane material has an axial shear strength of at least 0.25 MPa when the axial shear strength is measured at 23 °C and when the rigid polyurethane material is aged, and wherein the rigid polyurethane material has an axial shear strength of at least 0.20 MPa when the axial shear strength is measured at 140 °C and when the rigid polyurethane material is aged.

3. Insulated pipe according to, wherein the one or more delayed-action catalysts are selected from one or more of amine-based delayed-action catalysts, metal based delayed-action catalysts, or combinations hereof.

4. Insulated pipe according claim 3, wherein the amine-based delayed-action catalysts are selected from tertiary amine based delayed-action catalysts, acid-blocked amine delayed-action catalysts, non-acid blocked amine delayed-action catalysts, or combinations hereof.

5. Insulated pipe according to claim 4, wherein the tertiary amine delayed-action catalyst is selected from 1-(2-hydroxypropyl)-1,4-diazabicyclo[2.2.2]octan-1-ium 2-ethylhexanoate, 1,8-diazabicyclo[5.4.0]undec-7-en, or combinations hereof.

6. Insulated pipe according to any preceding claim, wherein the one or more delayed-action catalysts are in combination with one or more non-delayed-action catalysts.

7. Insulated pipe according to claim 6, wherein the one or more non-delayed-action catalysts are selected from 1,4-diazabicyclo[2.2.2]octane, benzyldimethylamine, dimethylcyclohexylamine, N, N', N"-tris(dimethylamino-propyl)-hexahydrotriazin, or combinations hereof.

8. Insulated pipe according to any preceding claim, wherein the one or more delayed-action catalysts are in an amount of 2% or less by weight compared to the total weight of the insulating layer material.

9. Insulated pipe according to any preceding claims, wherein the insulating layer further comprises a physical blowing agent selected from one or more of the group of n-pentane, i-pentane, c-pentane, CO2, argon, krypton, xenon, HFC, or a hydrofluoroolefin (HFO) selected from the group comprising compounds of the formula I, 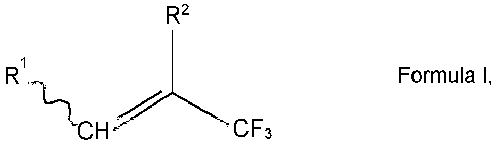 where each of R¹ and R² denote H, F, CI, or CF₃.

10. Insulated pipe according to claim 9, wherein the HFO is selected from:
• HFO-1233zd/HCFO-1233zd, where R¹ in Formula I denotes Cl and R² denotes H, or
• HFO-1224yd/HCFO-1224yd, where R¹ in Formula I denotes Cl and R² denotes F, or
• HFO-1336mzz, where R¹ in Formula I denotes CF₃ and R² denotes H, or
• HFO-1234yf, where R¹ in Formula I denotes H and R² denotes F, or
• HFO-1234ze, where R¹ in Formula I denotes F and R² denotes H.

11. Method for producing an insulated pipe comprising at least one inner pipe surrounded by an layer of insulation material, the method comprising:
• providing one or more inner pipes;
• providing a shell, the outer shell being an outer casing or a mould;
• adding liquid insulation material comprising a polyol comprising component, an isocyanate, and a delayed-action catalyst in a liquid state between the shell and the one or more inner pipes;
• allowing the liquid insulation material to expand to fill the void between the one or more inner pipes and the shell; and
• allowing the liquid insulation material to cure through a number of consecutive development stages to form a rigid polyurethane material having a compressive strength of at least 0.30 MPa, such as at least 0.40 MPa.

12. Method according to claim 11, wherein the shell is a mould, wherein the method further comprises:
• removing the mould after curing the rigid polyurethane material; and
• covering the rigid polyurethane material with an outer casing.

13. Method according to any of the claims 11-12, wherein the method further comprises positioning a diffusion barrier layer between the outer casing and the insulating layer:
• after curing the rigid polyurethane material and before covering the rigid polyurethane material with an outer casing; or
• prior to adding the liquid insulation material by positioning the diffusion barrier layer inside or as part of the casing; or
• by providing a film comprising the diffusion barrier layer and adding the liquid insulation material between the film and the one or more inner pipes.

14. Use of a delayed-action catalyst for increased compressive strength in a rigid polyurethane material in an insulated pipe comprising:
• at least one inner pipe;
• an outer casing;
• and an insulating layer positioned between the outer casing and the at least one inner pipe, wherein the insulating layer comprises the rigid polyurethane material.

15. Use of a delayed-action catalyst according to claim 14, wherein the rigid polyurethane material has a compressive strength of at least 0.40 MPa, when the insulated pipe comprises one inner pipe, or wherein the rigid polyurethane material has a compressive strength of at least 0.30 MPa, such as at least 0.40 MPa, when the insulated pipe comprises two inner pipes.
